# EUROPEAN PATENT APPLICATION

(11) **EP 4 737 986 A1**
(43) Date of publication of application: **06.05.2026**
(21) Application number: 25211272.7
(22) Date of filing: 27.10.2025
(51) Int. Cl.: G02B 27/01, B60K 35/23

(54) **HEAD-UP DISPLAY APPARATUS**

(30) Priority: 01.11.2024 KR 20240153431
(71) Applicant: Hyundai Mobis Co., Ltd., Gangnam-gu Seoul (KR)
(72) Inventor: KIM, Byung Ki, 16891 Yongin-si, Gyeonggi-do (KR)
(74) Representative: Jung, Minkyu

(57) **Abstract**

A head-up display (HUD) apparatus comprises a housing including a lower case that is open at a top thereof and defines an internal space, and an upper case that corresponds to the lower case to cover the top of the lower case; an aspherical mirror configured to reflect an image emitted from a picture generation unit onto a windshield, and the aspherical mirror being disposed in the lower case; and a crumple zone including an impact absorbing unit configured to be disposed in the housing and to absorb an impact transmitted to the housing, in the event of a vehicle collision.

## Description

### CROSS-REFERENCE TO RELATED APPLICATION

This application claims priority to and the benefit under 35 USC § 119(a) of Korean Patent Application No. 10-2024-0153431, filed on November 01, 2024, in the Korean Intellectual Property Office, the entire disclosure(s) of which is hereby incorporated herein by reference in its entirety for all purposes.

### TECHNICAL FIELD

The present disclosure relates to a head-up display apparatus. More particularly, the present disclosure relates to a head-up display apparatus in which a crumple zone is formed to absorb impact in the event of a vehicle collision.

### BACKGROUND

The content described in this section merely provides background information on the present disclosure and does not constitute the prior art.

A head-up display apparatus is an apparatus that displays an image containing information such as vehicle speed, remaining fuel, and navigation guidance on a front window of a vehicle, called a windshield. The head-up display apparatus is generally configured to reflect head-up display information projected from a picture graphic unit (PGU) through an aspherical mirror and display it on the windshield.

Further, when a driver's eye level changes, the head-up display apparatus is configured to adjust the height of the information displayed on the windshield by rotating the aspherical mirror to adjust the reflection angle of the aspherical mirror.

The head-up display apparatus is located inside a cockpit of the vehicle. In the event of a frontal collision between the vehicle equipped with the head-up display apparatus and an object, the head-up display apparatus may be damaged and cause additional injury to a passenger. In addition, when the vehicle collides with a pedestrian, the pedestrian's head or body may collide with an area around the head-up display apparatus, thereby posing a threat to the pedestrian's life.

### SUMMARY

A head-up display apparatus according to an embodiment is to minimize damage to the head-up display apparatus by separating destructible and non-destructible regions of the head-up display apparatus using a notch in the event of a vehicle collision.

A head-up display apparatus according to an embodiment is to minimize damage to the head-up display apparatus and minimize injury to pedestrians by using an impact absorbing unit in the event of a vehicle collision.

The objectives to be achieved by the present disclosure are not limited to the above-mentioned objectives, and other objectives which are not mentioned will be clearly understood by those skilled in the art from the following description.

According to one embodiment of the present disclosure, the present disclosure provides a head-up display (HUD) apparatus including a housing including a lower case that is open at a top thereof and defines an internal space, and an upper case that corresponds to the lower case to cover the top of the lower case; an aspherical mirror configured to reflect an image emitted from a picture generation unit onto a windshield, and the aspherical mirror being disposed in the lower case; and a crumple zone including an impact absorbing unit configured to be disposed in the housing and to absorb an impact transmitted to the housing in the event of a vehicle collision. In some embodiments, the crumple zone may further include a plurality of notches configured to induce destruction of the housing, thereby dispersing the impact transmitted to the housing.

In some embodiments, the plurality of notches may be formed on a first surface of the housing corresponding to a forward direction of a vehicle and on at least one second surface adjacent to the first surface.

In some embodiments, each notch may be configured such that a groove is formed toward an inside of the housing.

In some embodiments, the impact absorbing unit may include a front impact absorbing member disposed to correspond to a front portion of the lower case to absorb an impact transmitted to a front portion of the housing; and a head impact absorbing member disposed to correspond to a front portion of the upper case to absorb an impact transmitted to an upper portion of the housing.

In some embodiments, the front impact absorbing member may include at least one front compression portion formed such that a central portion thereof protrudes toward the front portion of the lower case; a first core portion extending along a longitudinal direction of the front portion of the lower case to disperse an impact transmitted from the front compression portion; at least one rear compression portion symmetric with the front compression portion based on the first core portion and formed such that a central portion thereof protrudes toward the aspherical mirror; and a first coupling portion configured to secure the front compression portion, the first core portion, and the rear compression portion to both sides of the lower case.

In some embodiments, the front impact absorbing member may further include a protrusion configured to be fitted into a groove formed on one side of the front portion of the lower case.

In some embodiments, an area of the central portion of the rear compression portion may be disposed to contact the aspherical mirror such that the aspherical mirror supports an impact transmitted to the front impact absorbing member.

In some embodiments, the head impact absorbing member may include an impact distribution portion extending along a longitudinal direction of a front portion of the upper case to disperse an impact transmitted to the upper case; at least one upper compression portion formed such that a central portion thereof protrudes toward the impact distribution portion; a second core portion formed to correspond to the impact distribution portion to disperse an impact transmitted from the upper compression portion; at least one lower compression portion symmetric with the upper compression portion based on the second core portion and formed such that a central portion thereof protrudes toward a bottom surface of the housing; and a second coupling portion configured to secure the upper compression portion, the second core portion, and the lower compression portion to both sides of the upper case.

In some embodiments, an area of the central portion of the lower compression portion may be disposed to contact the front impact absorbing member such that the front impact absorbing member supports an impact transmitted to the head impact absorbing member.

### ADVANTAGEOUS EFFECTS

According to an embodiment, a head-up display apparatus can minimize damage to the head-up display apparatus by separating destructible and non-destructible regions of the head-up display apparatus using a notch in the event of a vehicle collision.

According to an embodiment, a head-up display apparatus can minimize damage to the head-up display apparatus and minimize injury to pedestrians by using an impact absorbing unit in the event of a vehicle collision.

### BRIEF DESCRIPTION OF THE DRAWINGS

Fig. 1 is a perspective view illustrating a head-up display apparatus according to an embodiment of the present disclosure.
Fig. 2 is a sectional view taken along line A-A' of Fig. 1 according to an embodiment of the present disclosure.
Fig. 3 is a perspective view illustrating a head-up display apparatus including a plurality of notches added to the embodiment of Fig. 1.
Fig. 4 is an exploded perspective view illustrating the configuration of a head-up display apparatus according to an embodiment of the present disclosure.
Fig. 5 is a plan view illustrating the configuration of a front impact absorbing member according to an embodiment of the present disclosure.
Fig. 6 is a plan view illustrating a configuration in which the front impact absorbing member according to an embodiment of the present disclosure is disposed to contact an aspherical mirror.
Fig. 7 is a plan view illustrating the configuration of an impact absorbing member including an added protrusion according to an embodiment of the present disclosure.
Fig. 8 is a plan view illustrating the configuration of a head impact absorbing member according to an embodiment of the present disclosure.
Fig. 9 is a plan view illustrating a configuration in which the head impact absorbing member according to an embodiment of the present disclosure is disposed to contact a front impact absorbing member.

### DETAILED DESCRIPTION

Hereinafter, some embodiments of the present disclosure will be described in detail with reference to the accompanying drawings. It is to be noted that in giving reference numerals to components of each of the accompanying drawings, the same components will be denoted by the same reference numerals even though they are illustrated in different drawings. Further, in describing exemplary embodiments of the present invention, well-known functions or constructions will not be described in detail since they may unnecessarily obscure the understanding of the present invention.

Terms 'first', 'second', i), ii), a), b), and the like, will be used in describing components according to embodiments of the present disclosure. These terms are only for distinguishing the components from other components, and the nature, sequence, order, or the like of the components are not limited by the terms. Throughout the present specification, unless explicitly described to the contrary, "including" or "comprising" any components will be understood to imply the inclusion of other elements rather than the exclusion of any other elements.

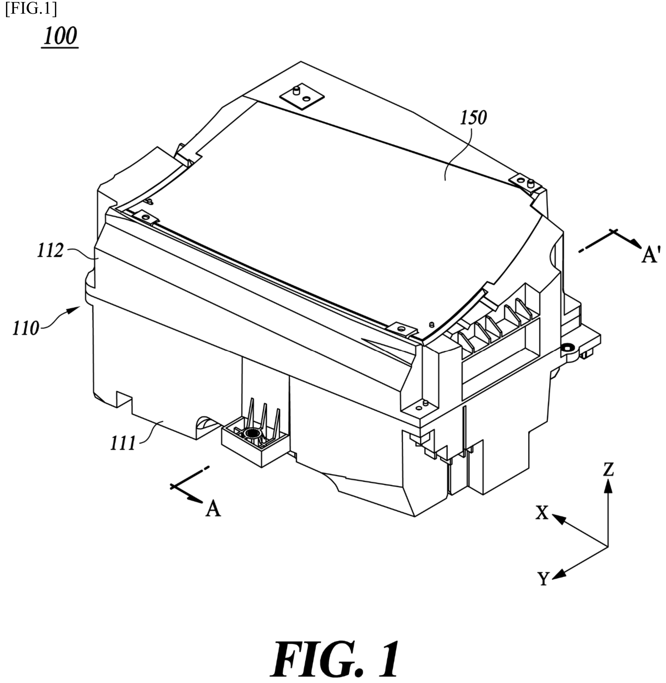

Fig. 1 is a perspective view illustrating a head-up display apparatus according to an embodiment of the present disclosure.

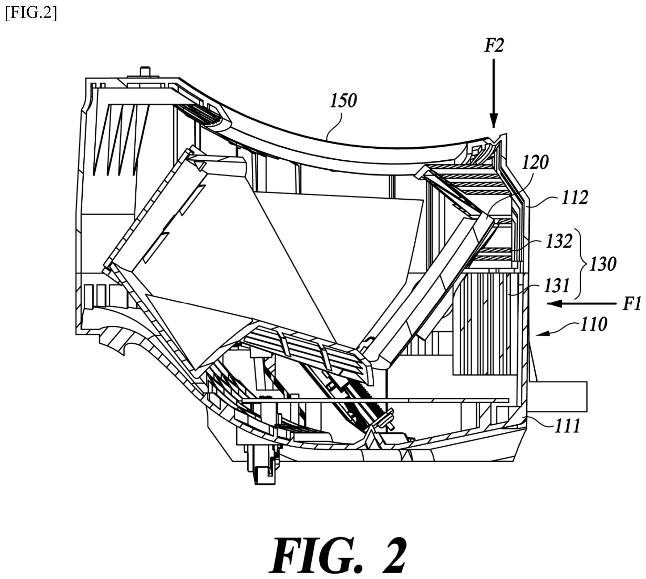

Fig. 2 is a sectional view taken along line A-A' of Fig. 1 according to an embodiment of the present disclosure.

Referring to Figs. 1 and 2, the head-up display apparatus 100 may include all or some of a housing 110, an aspherical mirror 120, and a crumple zone.

The housing 110 may include a lower case 111 and an upper case 112.

The lower case 111 may be configured to be open at a top thereof. The lower case 111 may define an internal space to accommodate various components of the head-up display apparatus 100.

The lower case 111 may be configured as a structure for combining various components of the head-up display apparatus 100 therein. For example, the lower case 111 may accommodate a plurality of components for displaying an image on a windshield, such as a picture generation unit or a driving module.

The picture generation unit may form an image containing information such as vehicle speed, remaining fuel, and navigation guidance. The picture generation unit may include a LED PCB (LED Printed Circuit Board), a display, a funnel, a diffuser (not shown), etc.

The driving module may rotate the aspherical mirror 120 by elevating or lowering a link unit based on the rotating force of a motor. This is an example configuration but is not necessarily limited thereto.

The upper case 112 may be configured to correspond to the lower case 111. The upper case 112 may be configured to cover the top of the lower case 111.

The upper case 112 may be coupled to an upper contour of the lower case 111 to form a closed area. That is, after various components of the head-up display apparatus are installed in the lower case 111, the upper case 112 may be screwed to at least one fastening portion of the lower case 111, thereby completing the assembly of the head-up display apparatus.

The aspherical mirror 120 may be configured to reflect an image emitted from the picture generation unit onto the windshield. The aspherical mirror 120 may be accommodated in the lower case 111.

The aspherical mirror 120 is an optical element for magnifying and projecting the image generated from an image output surface onto the windshield. The aspherical mirror 120 may be disposed in front of the picture generation unit along a forward optical path and may be configured to change the path of the image output from the picture generation unit. The forward optical path refers to a path through which the image output from the picture generation unit reaches a driver of the vehicle.

A crumple zone may include an impact absorbing unit 130. Here, the crumple zone refers to a specific area that absorbs impact through structural destruction in the event of a vehicle collision and prevents the impact from being transmitted to a non-destructive area, thereby minimizing injury.

By forming the crumple zone, the head-up display apparatus 100 may be intentionally designed to deform or break, thereby minimizing damage to important internal components of the head-up display apparatus 100 as well as injuries to passengers and pedestrians.

The impact absorbing unit 130 may be configured to be accommodated in the housing 110 and absorb impact transmitted to the housing 110 in the event of the vehicle collision.

The impact absorbing unit 130 may include all or some of a front impact absorbing member 131 and a head impact absorbing member 132.

The head-up display apparatus 100 may further include a bezel 150. The bezel 150 may be disposed in an area of the upper portion of the upper case 112. The bezel 150 may prevent impact or dust transmitted from the outside.

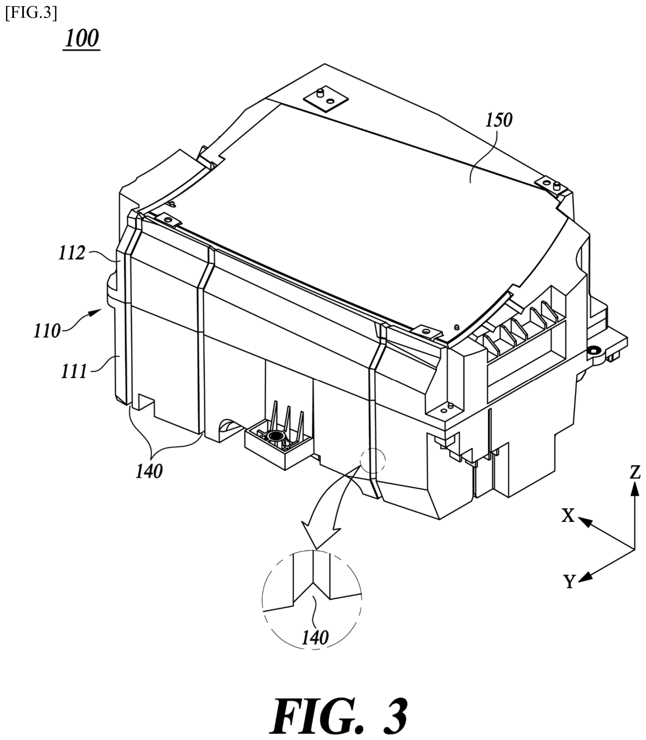

Fig. 3 is a perspective view illustrating a head-up display apparatus including a plurality of notches added to the embodiment of Fig. 1.

Referring to Fig. 3, the crumple zone may further include a plurality of notches 140. The notch 140 may be configured to induce the destruction of the housing 110 and to disperse the impact transmitted to the housing 110.

Here, the notch 140 refers to a groove or cut portion designed to easily induce structural deformation or destruction, and means a portion created so that destruction occurs at an intended location when an impact is applied.

The notch 140 may be formed on one surface of the housing 110 corresponding to the forward direction of the vehicle. Specifically, the plurality of notches 140 may be formed on one surface of the upper case 112 corresponding to the forward direction of the vehicle.

The plurality of notches 140 formed on the upper case 112 may extend along a surface of the lower case 111 corresponding to the forward direction of the vehicle. However, this is an example configuration but is not necessarily limited thereto.

The plurality of notches 140 may be formed on at least one another surface adjacent to one surface of the housing 110. Specifically, the plurality of notches 140 may be formed on the upper and side surfaces of the upper case 112. Further, the plurality of notches 140 may be formed on the lower and side surfaces of the lower case 111. However, this is an example configuration but is not necessarily limited thereto.

The notch 140 may be configured such that a groove is formed toward the inside of the housing 110. Specifically, the notch 140 may be formed in a V-shaped groove toward the inside of the housing 110, so that destruction occurs at an intended location when an impact is applied. However, this is an example configuration but is not necessarily limited thereto.

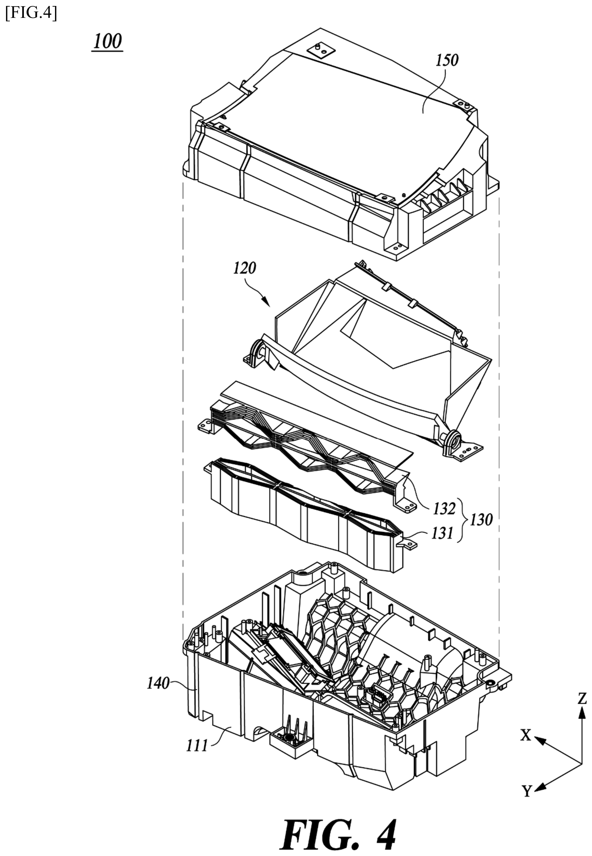

Fig. 4 is an exploded perspective view illustrating the configuration of the head-up display apparatus according to an embodiment of the present disclosure.

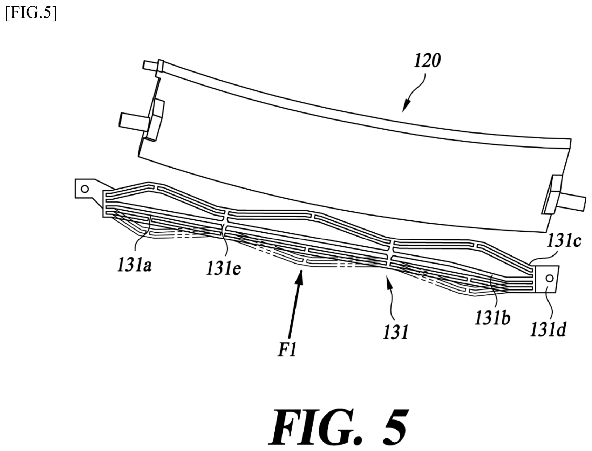

Fig. 5 is a plan view illustrating the configuration of the front impact absorbing member according to an embodiment of the present disclosure.

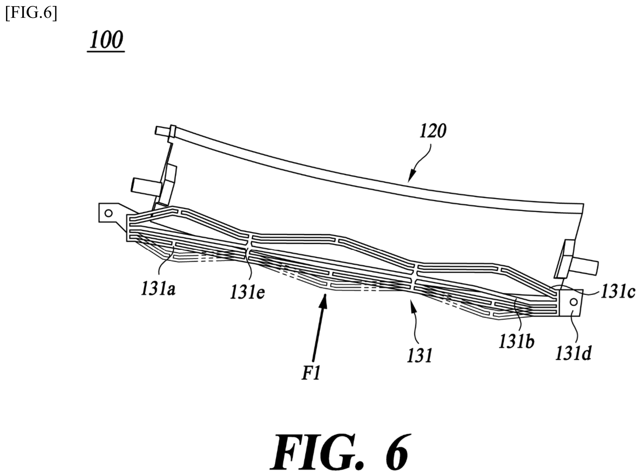

Fig. 6 is a plan view illustrating a configuration in which the front impact absorbing member according to an embodiment of the present disclosure is disposed to contact the aspherical mirror.

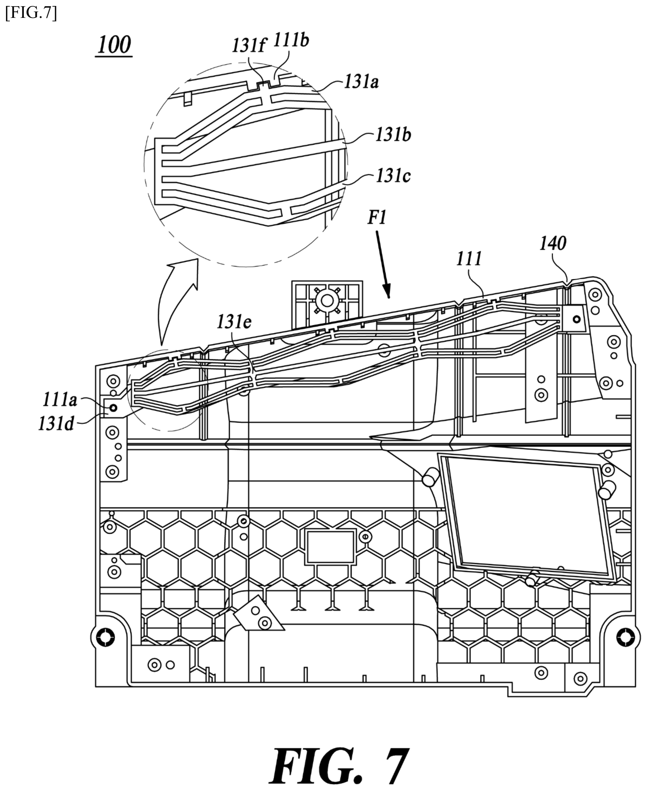

Fig. 7 is a plan view illustrating the configuration of an impact absorbing member including an added protrusion according to an embodiment of the present disclosure.

Referring to Figs. 4 to 7, the front impact absorbing member may be disposed to correspond to a front portion of the lower case 111 so as to absorb impact transmitted to a front portion of the housing 110.

The front impact absorbing member 131 may include all or some of a front compression portion 131a, a first core portion 131b, a rear compression portion131c, a first coupling portion 131d, and a first vertical member 131e.

The front compression portion 131a may be formed such that a central portion thereof protrudes toward the front portion of the lower case 111. The central portion of the front compression portion 131a may be formed to protrude toward the front portion of the lower case 111 relative to both ends of the front compression portion 131a.

At least one front compression portion 131a may be formed. Specifically, a plurality of front compression portions 131a may be extended from both ends of the front compression portion 131a along the longitudinal direction of the front portion of the lower case 111.

In the event of a vehicle collision, the central portion of the front compression portion 131a is compressed toward the first core portion 131b by a protruding width of the central portion of the front compression portion 131a, thereby absorbing impact and dispersing energy.

The plurality of front compression portions 131a disposed along the longitudinal direction of the front portion of the lower case 111 may be configured in multiple layers toward the front direction of the vehicle. The front compression portions 131a formed in multiple layers may absorb and disperse the impact in stages in the event of the vehicle collision. However, this is an example configuration but is not necessarily limited thereto.

The first core portion 131b may extend along the longitudinal direction of the front portion of the lower case 111 to disperse impact transmitted from the front compression portion 131a.

The rear compression portion 131c may be disposed symmetrically with the front compression portion 131a based on the first core portion 131b. The rear compression portion 131c may be formed such that a central portion thereof protrudes toward the aspherical mirror 120. The central portion of the rear compression portion 131c may be formed to protrude toward the aspherical mirror 120 relative to both ends of the rear compression portion 131c.

At least one rear compression portion 131c may be formed. Specifically, a plurality of rear compression portions 131c may be extended from both ends of the rear compression portion 131c along the longitudinal direction of the front portion of the lower case 111.

In the event of a vehicle collision, both ends of the rear compression portion 131c are compressed toward the aspherical mirror 120 by a protruding width of the central portion of the rear compression portion 131c, thereby absorbing impact and dispersing energy.

The plurality of rear compression portions 131c disposed along the longitudinal direction of the front portion of the lower case 111 may be configured in multiple layers toward the aspherical mirror 120. The rear compression portions 131c formed in multiple layers may absorb and disperse the impact in stages in the event of the vehicle collision. However, this is an example configuration but is not necessarily limited thereto.

The first coupling portion 131d may be configured to secure the front compression portion 131a, the first core portion 131b, and the rear compression portion 131c to both sides of the lower case 111. The first coupling portion 131d may be coupled to a first groove 111a formed on a side of the lower case 111.

The first vertical member 131e may be configured to connect the front compression portion 131a, the first core portion 131b, and the rear compression portion 131c in a direction perpendicular to the first core portion 131b. At least one first vertical member 131e may be formed.

The front impact absorbing member 131 may further include a protrusion 131f configured to be fitted into a groove formed on one side of the front portion of the lower case 111. That is, the protrusion 131f is fitted into a second groove 111b so that the front impact absorbing member 131 is fixed to the lower case 111. The protrusion 131f may be formed at the central portion of the front compression portion 131a.

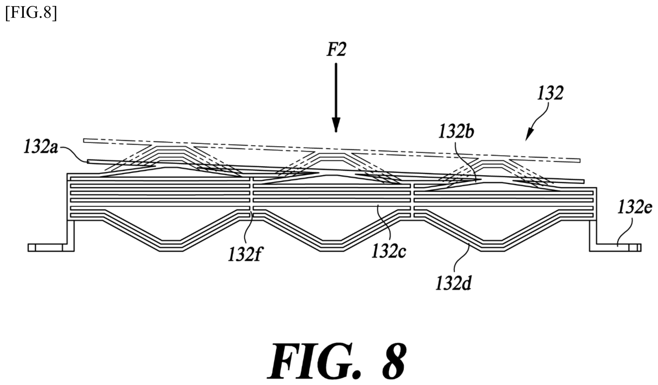

Fig. 8 is a plan view illustrating the configuration of a head impact absorbing member according to an embodiment of the present disclosure.

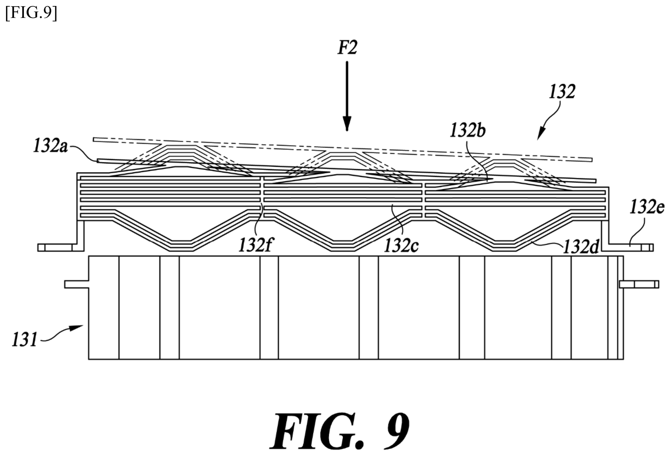

Fig. 9 is a plan view illustrating a configuration in which the head impact absorbing member according to an embodiment of the present disclosure is disposed to contact the front impact absorbing member.

Referring to Figs. 8 and 9, the head impact absorbing member 132 may include all or some of an impact distribution portion 132a, an upper compression portion 132b, a second core portion 132c, a lower compression portion 132d, a second coupling portion 132e, and a second vertical member 132f.

The head impact absorbing member 132 may be disposed to correspond to a front portion of the upper case 112 so as to absorb impact transmitted to an upper portion of the housing 110.

The impact distribution portion 132a may be formed to extend along the longitudinal direction of the front portion of the upper case 112 to disperse the impact transmitted to the upper case 112. The impact distribution portion 132a may be configured to effectively disperse an impact force, which varies depending on a collision location, in the event of a collision on the upper portion of the housing 110.

The upper compression portion 132b may be formed such that a central portion thereof protrudes toward the impact distribution portion 132a. The central portion of the upper compression portion 132b may be formed to protrude toward the impact distribution portion 132a relative to both ends of the upper compression portion 132b.

At least one upper compression portion 132b may be formed. Specifically, a plurality of upper compression portions 132b may be extended from both ends of the upper compression portion 132b along the longitudinal direction of the front portion of the upper case 112.

In the event of a vehicle collision, the central portion of the upper compression portion 132b is compressed toward the second core portion 132c by a protruding width of the central portion of the upper compression portion 132b, thereby absorbing impact and dispersing energy. The plurality of rear compression portions 131c disposed along the longitudinal direction of the front portion of the upper case 112 may be configured in multiple layers toward the upper side of the housing 110. The upper compression portions 132b formed in multiple layers may absorb and disperse the impact in stages when the pedestrian and the vehicle collide, thereby minimizing an injury to the pedestrian. However, this is an example configuration but is not necessarily limited thereto.

The second core portion 132c may be formed to correspond to the impact distribution portion 132a so as to disperse impact transmitted from the upper compression portion 132b. The second core portion 132c may be formed to extend along the longitudinal direction of the front portion of the upper case 112.

The lower compression portion 132d may be disposed symmetrically with the upper compression portion 132b based on the second core portion 132c. The lower compression portion 132d may be formed such that a central portion thereof protrudes toward a bottom surface of the housing 110. The central portion of the lower compression portion 132d may be formed to protrude toward the bottom surface of the housing 110 relative to both ends of the lower compression portion 132d.

At least one lower compression portion 132d may be formed. Specifically, a plurality of lower compression portions 132d may be extended from both ends of the lower compression portion 132d along the longitudinal direction of the front portion of the upper case 112.

In the event of a vehicle collision, both ends of the lower compression portion 132d are compressed toward the bottom surface of the housing 110 by a protruding width of the central portion of the lower compression portion 132d, thereby absorbing impact and dispersing energy.

The plurality of lower compression portions 132d disposed along the longitudinal direction of the front portion of the upper case 112 may be configured in multiple layers toward the bottom surface of the housing 110. The lower compression portions 132d formed in multiple layers may absorb and disperse the impact in stages when the pedestrian and the vehicle collide, thereby minimizing an injury to the pedestrian. However, this is an example configuration but is not necessarily limited thereto.

The second coupling portion 132e may be configured to secure the impact distribution portion 132a, the upper compression portion 132b, the second core portion 132c, and the lower compression portion 132d to both sides of the upper case 112. The second coupling portion 132e may be coupled to a third groove 112a formed on a side of the upper case 112.

The second vertical member 132f may be configured to connect the impact distribution portion 132a, the upper compression portion 132b, the second core portion 132c, and the lower compression portion 132d in a direction perpendicular to the second core portion 132c. At least one second vertical member 132f may be formed.

One area of the central portion of the lower compression portion 132d may be disposed to contact the front impact absorbing member 131 so that the front impact absorbing member 131 may support impact transmitted to the head impact absorbing member 132. That is, it may be configured to support the fracture displacement of the front impact absorbing member 131.

The spirit of the present embodiment is illustratively described hereinabove. It will be appreciated by those skilled in the art to which the present embodiment pertains that various modifications and alterations may be made without departing from the essential characteristics of the present embodiment. Accordingly, the present embodiments are not to limit the spirit of the present embodiment, but are to describe the spirit of the present embodiment. The technical idea of the present embodiment is not limited to these embodiments. The scope of the present embodiment should be interpreted by the following claims, and it should be interpreted that all the spirits equivalent to the following claims fall within the scope of the present embodiment.

### [DESCRIPTION OF REFERENCE NUMERALS]

100: head-up display apparatus
110: housing
120: aspherical mirror
130: impact absorbing unit
140: notch
150: bezel

## Claims

1. A head-up display (HUD) apparatus comprising:
a housing including a lower case that is open at a top thereof and defines an internal space, and an upper case that corresponds to the lower case to cover the top of the lower case;
an aspherical mirror configured to reflect an image emitted from a picture generation unit onto a windshield, and the aspherical mirror being disposed in the lower case; and
a crumple zone including an impact absorbing unit configured to be disposed in the housing and to absorb an impact transmitted to the housing in the event of a vehicle collision.

2. The apparatus of claim 1, wherein the crumple zone further comprises:
a plurality of notches configured to induce destruction of the housing, thereby dispersing the impact transmitted to the housing.

3. The apparatus of claim 2, wherein the plurality of notches are formed on a first surface of the housing corresponding to a forward direction of a vehicle and on at least one second surface adjacent to the first surface.

4. The apparatus of claim 2 or 3, wherein each notch is configured such that a groove is formed toward an inside of the housing.

5. The apparatus of any one of claims 1 to 4, wherein the impact absorbing unit comprises:
a front impact absorbing member disposed to correspond to a front portion of the lower case to absorb an impact transmitted to a front portion of the housing; and
a head impact absorbing member disposed to correspond to a front portion of the upper case to absorb an impact transmitted to an upper portion of the housing.

6. The apparatus of claim 5, wherein the front impact absorbing member comprises:
at least one front compression portion formed such that a central portion thereof protrudes toward the front portion of the lower case;
a first core portion extending along a longitudinal direction of the front portion of the lower case to disperse an impact transmitted from the front compression portion;
at least one rear compression portion symmetric with the front compression portion based on the first core portion and formed such that a central portion thereof protrudes toward the aspherical mirror; and
a first coupling portion configured to secure the front compression portion, the first core portion, and the rear compression portion to both sides of the lower case.

7. The apparatus of claim 5 or 6, wherein the front impact absorbing member further comprises:
a protrusion configured to be fitted into a groove formed on one side of the front portion of the lower case.

8. The apparatus of claim 6 or 7, wherein an area of the central portion of the rear compression portion is disposed to contact the aspherical mirror such that the aspherical mirror supports an impact transmitted to the front impact absorbing member.

9. The apparatus of any one of claims 5 to 8, wherein the head impact absorbing member comprises:
an impact distribution portion extending along a longitudinal direction of a front portion of the upper case to disperse an impact transmitted to the upper case;
at least one upper compression portion formed such that a central portion thereof protrudes toward the impact distribution portion;
a second core portion formed to correspond to the impact distribution portion to disperse an impact transmitted from the upper compression portion;
at least one lower compression portion symmetric with the upper compression portion based on the second core portion and formed such that a central portion thereof protrudes toward a bottom surface of the housing; and
a second coupling portion configured to secure the upper compression portion, the second core portion, and the lower compression portion to both sides of the upper case.

10. The apparatus of claim 9, wherein an area of the central portion of the lower compression portion is disposed to contact the front impact absorbing member such that the front impact absorbing member supports an impact transmitted to the head impact absorbing member.

11. An apparatus comprising:
a housing defining an internal space;
an aspherical mirror disposed in the housing and configured to reflect an image onto a windshield of a vehicle; and
a crumple zone formed on the housing, the crumple zone comprising:
a plurality of notches configured to induce controlled deformation of the housing in response to an impact from a vehicle collision, thereby dispersing the impact and minimizing damage to internal components of the apparatus; and
an impact absorbing unit disposed in the housing and configured to absorb and disperse the impact transmitted through the housing.

12. The apparatus of claim 11, wherein the plurality of notches include V-shaped grooves extending along a forward-facing surface of the housing.

13. The apparatus of claim 11 or 12, wherein the impact absorbing unit includes a front impact absorbing member and a head impact absorbing member, the front impact absorbing member being positioned adjacent to the aspherical mirror.

14. The apparatus of any one of claims 11 to 13, further comprising a bezel disposed on an upper portion of the housing to prevent external dust and impact transmission.

15. The apparatus of any one of claims 11 to 14, wherein the crumple zone is configured to separate a destructible region from a non-destructible region of the housing during the vehicle collision.
